# DEMANDE DE BREVET EUROPEEN

(11) **EP 1 383 090 A1**
(43) Date de publication de la demande: **21.01.2004**
(21) Numéro de dépôt: 03291736.1
(22) Date de dépôt: 11.07.2003
(51) Int. Cl.: G07F 7/10

(54) **Procédé d'enregistrement dans une carte a puce et carte a puce pour mettre en oeuvre ce procédé**

(30) Priorité: 19.07.2002 FR 0209205
(71) Demandeur: GROUPEMENT DES CARTES BANCAIRES "CB", 75008 Paris (FR)
(72) Inventeur: Andraud, Sylvie, 75008 Paris (FR); Zwaenepoel, Evelyne, 94160 Saint-Mandé (FR); Meggle, Claude, 75014 Paris (FR)
(74) Mandataire: Loisel, Bertrand

(57) **Abrégé**

Pour générer un élément tangible de preuve qui garantit qu'une transaction déterminée a été réalisée en utilisant une carte à microcircuit déterminée, le procédé comprend des étapes (22,27) dans lesquelles un microprocesseur contenu dans le microcircuit, enregistre dans une mémoire interne du microcircuit, un cryptogramme sur les données de la transaction, dès qu'il détecte un événement conforme pour valider la transaction, le microprocesseur émet alors un signal de validation de transaction vers l'extérieur de la carte, après avoir enregistré le cryptogramme dans la mémoire interne.

## Description

Le domaine de l'invention est celui des transactions validées par une communication entre un terminal et un microcircuit protégé.

On connaît par exemple les cartes à microcircuit ou cartes à puce dans lesquelles le microcircuit comprend un microprocesseur et une mémoire interne.

La mémoire interne de chaque carte contient des moyens de reconnaissance d'un code secret propre à la carte de façon à ne valider une transaction que lorsque le détenteur de la carte communique un code qui correspond au code secret. Le microcircuit étant protégé contre les intrusions, une validation de transaction par la carte, est reconnue constituer une preuve selon laquelle le détenteur légitime de la carte, a accepté la transaction.

L'état connu de la technique divulgue de nombreux moyens de sécurisation du microcircuit, du terminal et des communications entre le microcircuit et le terminal, tels que les procédés cryptographiques, les destructions sur tentative d'effraction.

Cependant, le détenteur légitime de la carte peut être tenté de réfuter la preuve en prétextant par exemple qu'un dysfonctionnement du terminal ou des moyens de communication avec le terminal, ou encore qu'une subtilisation de la carte et de son code secret à son insu, sont à l'origine d'une fausse preuve.

D'autre part, lorsque la transaction concerne le débit d'un compte bancaire associé à la carte, la validation est généralement accompagnée d'une identification du compte communiquée par le microcircuit de la carte au sein de la transaction.

Le détenteur légitime du compte bancaire, peut vouloir répudier la transaction en prétextant par exemple que l'identification de son compte a été communiquée par une autre carte que la sienne, un clone illégitime ou une autre carte qui avait légitimement été associée à son compte mais à laquelle il a depuis fait opposition.

Un premier objet de l'invention est un procédé pour générer un élément tangible de preuve qui garantit qu'une transaction a été réalisée en utilisant une carte à microcircuit lorsque cette carte a effectivement servi à réaliser cette transaction.

Le microcircuit de la carte comprenant un microprocesseur et une mémoire interne, le procédé selon l'invention est remarquable en ce qu'il comprend des étapes dans lesquelles :
- le microprocesseur enregistre dans la mémoire interne, un cryptogramme sur les données de la transaction dès qu'il détecte un événement conforme pour valider la transaction,
- le microprocesseur émet un signal de validation de transaction vers l'extérieur de la carte, après avoir enregistré le cryptogramme dans la mémoire interne.

L'enregistrement dans la mémoire interne, du cryptogramme sur les données de la transaction, constitue un élément matériel et donc tangible de preuve que la transaction sur les données de laquelle porte le cryptogramme, a été réalisée à l'aide de la carte. Si le détenteur légitime de la carte tente de répudier la transaction, il est alors possible d'ordonner une lecture de la mémoire interne pour mettre en évidence le cryptogramme.

L'émission du signal de validation après avoir enregistré le cryptogramme, évite qu'une transaction soit validée sans que le cryptogramme ne soit enregistré. Si le détenteur de la carte retire celle-ci du lecteur qui l'alimente en puissance pour en arrêter le fonctionnement, le retrait de la carte immédiatement après l'émission du signal de validation, ne peut pas empêcher que le cryptogramme soit enregistré.

Le fait que l'enregistrement dans la mémoire interne soit effectué par le microprocesseur de la carte dès qu'il détecte un événement conforme, empêche un élément extérieur d'imposer un enregistrement falsifié dans la carte.

Un deuxième objet de l'invention, est une carte à microcircuit comprenant un microprocesseur et une mémoire interne. Particulièrement adaptée pour mettre en oeuvre le procédé selon l'invention, la carte est remarquable en ce que la mémoire interne comprend un microprogramme exécutable par le microprocesseur du microcircuit. Ce microprogramme est agencé pour :
- enregistrer dans la mémoire interne, un cryptogramme sur les données de chaque transaction, à détection d'un événement conforme pour valider la transaction,
- émettre un signal de validation de transaction vers l'extérieur de la carte, après avoir enregistré le cryptogramme dans la mémoire interne.

D'autres détails et avantages de l'invention seront mieux compris à l'aide de la description de mise en oeuvre qui suit en référence aux dessins annexés dans lesquels :
- la figure 1 présente un schéma de carte à microcircuit conforme à l'invention ;
- la figure 2 présente des étapes de procédé conforme à l'invention.

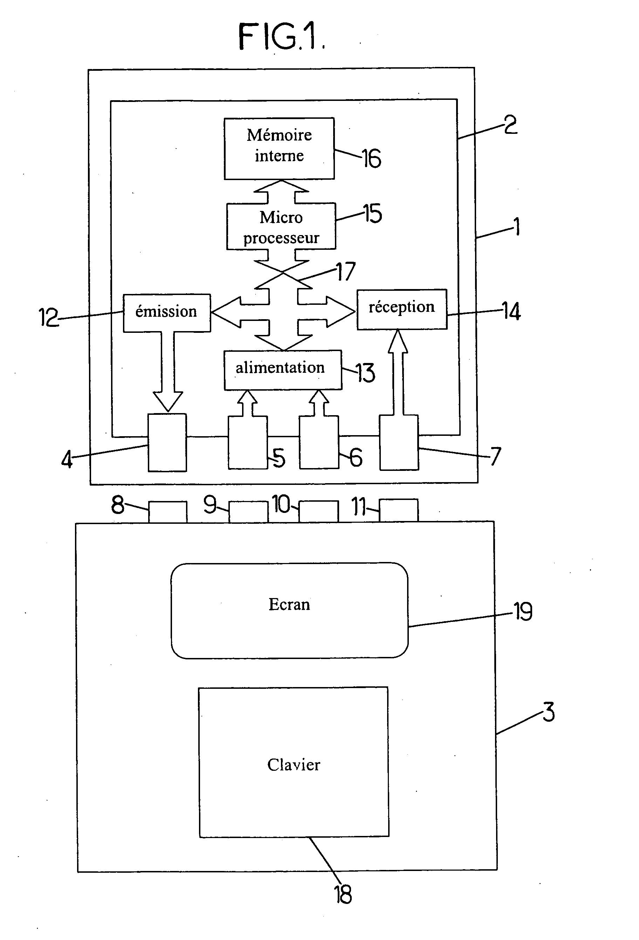

En référence à la figure 1, une carte 1 comprend un microcircuit 2 protégé contre les intrusions.

Différentes bornes plates 4, 5, 6, 7 sortent du microcircuit 2 sur la carte 1. Les bornes plates 4, 5, 6, 7 sont prévues pour être mises en contact électrique avec des bornes plates 8, 9, 10, 11 d'un lecteur de carte 3 lorsque la carte 1 est introduite dans le lecteur 3.

Le nombre de bornes n'est pas limitatif. On sait par exemple que de nombreuses cartes possèdent huit bornes plates.

Le microcircuit 2 comprend un microprocesseur 15 et une mémoire interne 16. Un bus interne 17 permet au microprocesseur 15 de traiter des données numériques reçues par des moyens de réception 14 connectés à la borne plate 7, des données numériques à émettre par des moyens d'émission 12 connectés à la borne plate 4, à l'aide de données numériques contenues dans la mémoire 16.

Des moyens d'alimentation 13 connectés aux bornes plates 5 et 6, sont agencés pour alimenter électriquement le microprocesseur 15, la mémoire interne 16, les moyens de réception 14 et les moyens d'émission 12. La mémoire interne 16 est telle qu'elle conserve ses données en absence d'alimentation électrique.

Le lecteur 3 comprend de façon connue un clavier 18 et un écran 19.

Pour effectuer une transaction, la carte 1 est introduite dans le lecteur 3 de façon à mettre en contact électrique chacune des bornes 4, 5, 6, 7 avec respectivement chacune des bornes 8, 9, 10, 11.

Les bornes 9 et 10 fournissent l'alimentation électrique de la carte 1. La borne 8 permet au lecteur 3 de recevoir les données numériques émises par la carte 1. La borne 11 permet au lecteur 3 d'émettre des données numériques vers la carte 1.

L'utilisateur de la carte, voyant un montant de transaction sur l'écran 19, tape son code confidentiel sur le clavier 18. Le lecteur 3 transmet alors le code confidentiel au microcircuit 2 par la borne 11. Le lecteur 3 considère la transaction validée lorsqu'il reçoit un signal de validation sur la borne 8 de façon à effectuer la transaction en interne si le lecteur 3 constitue un terminal ou à effectuer la transaction en externe sur un terminal en communication avec le lecteur 3.

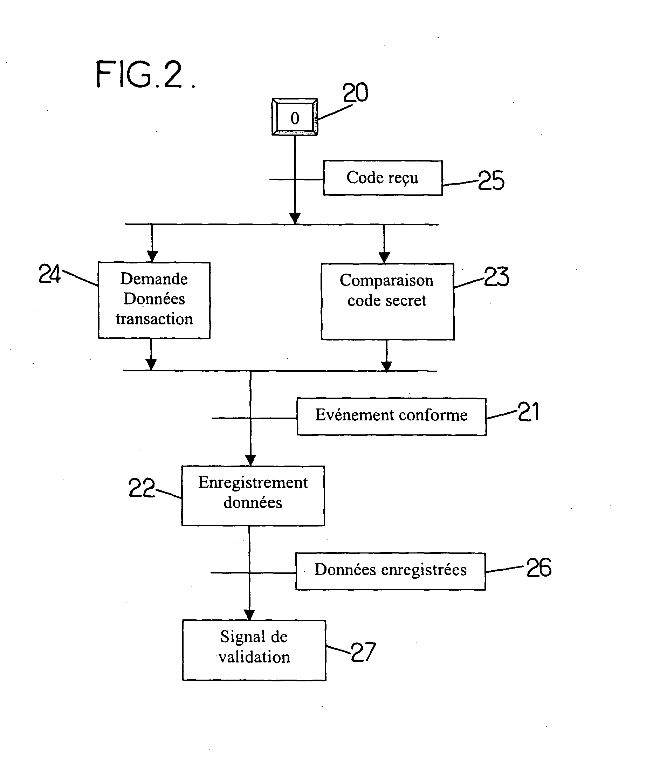

La mémoire interne 16 contient un microprogramme exécutable par le microprocesseur, spécialement agencé pour mettre en oeuvre le procédé maintenant expliqué en référence à la figure 2.

Une étape 20 d'initialisation est activée par la mise sous tension du microcircuit 2 lorsque les bornes 5 et 6 sont en contact avec les bornes 9 et 10.

Lorsque le microprocesseur 15 détecte un événement conforme pour valider la transaction, une transition 21 active une étape 22.

Dans l'étape 22, le microprocesseur 15 calcule un cryptogramme sur les données de la transaction et l'enregistre dans la mémoire interne 16. Le cryptogramme constitue une signature des données de la transaction comprenant par exemple une date (année, mois, jour, heure, minutes) et un montant monétaire.

Si un litige ultérieur intervient sur la transaction, une lecture du cryptogramme dans le microcircuit permet de prouver que le cryptogramme correspond effectivement à cette transaction.

L'intégralité des données pourrait être enregistrée. Cependant le cryptogramme offre l'avantage d'un enregistrement plus compact qui utilise moins de place en mémoire interne tout en offrant les garanties de sécurité suffisantes obtenues par des fonctions cryptographiques, par exemple des fonctions de hachage connues ou de chiffrement à la clé publique.

Le cryptogramme est amélioré lorsqu'il porte aussi sur les données de transaction qui comprennent un identificateur de destinataire de la transaction. Ceci permet d'assurer que la transaction n'a pas été détournée.

La fiabilité de l'enregistrement est renforcée par le fait que c'est le processeur 15 lui-même qui génère l'événement conforme de la transition 21 et non pas un équipement extérieur tel que le lecteur 3 ou tout autre terminal.

Avantageusement, l'événement conforme résulte d'une comparaison effectuée par le microprocesseur 15 dans une étape 23. L'étape 23 est activée à partir de l'étape 20, par une transition 25 qui correspond à une réception de code confidentiel reçu par le microcircuit 2.

Dans l'étape 23, le microprocesseur 15 exécute le microprogramme agencé pour effectuer la comparaison de façon à générer l'événement conforme lorsque le code reçu est égal à un code secret détenu dans la mémoire interne 16.

La transition 25 active aussi une étape 24 dans laquelle le microprocesseur 15 exécute le microprogramme agencé à cet effet pour recevoir les données de la transaction. Si les données de transaction ne sont pas systématiquement transmises par le lecteur 3 au microcircuit 2, le microprogramme contient des instructions pour demander ces données.

Lorsque le microprocesseur 15 reconnaît un acquittement selon lequel les données ou préférentiellement le cryptogramme, ont été enregistrés dans la mémoire 16, une transition 26 active une étape 27.

Dans l'étape 27, le microprocesseur 15 émet un signal de validation que les moyens d'émission 12 transmettent au lecteur 3 par les bornes 4 et 8.

## Revendications

1. Procédé pour générer un élément tangible de preuve qui garantit qu'une transaction déterminée a été réalisée en utilisant une carte (1) à microcircuit déterminée, le microcircuit (2) de ladite carte comprenant un microprocesseur (15) et une mémoire interne (16), **caractérisé en ce qu'**il comprend des étapes (22,27) dans lesquelles:
- le microprocesseur enregistre dans la mémoire interne, un cryptogramme sur les données de la transaction, dès qu'il détecte un événement conforme pour valider la transaction,
- le microprocesseur émet un signal de validation de transaction vers l'extérieur de la carte, après avoir enregistré le cryptogramme dans la mémoire interne.

2. Procédé selon la revendication 1, **caractérisé en ce que** ledit événement conforme résulte d'une comparaison effectuée par le microprocesseur qui vérifie qu'un code reçu est égal à un code secret détenu dans la mémoire interne.

3. Procédé selon la revendication 1, **caractérisé en ce que** les données de la transaction comprennent une date et un montant monétaire.

4. Procédé selon la revendication 3, **caractérisé en ce que** les données de la transaction comprennent un identificateur de destinataire de la transaction.

5. Carte (1) à microcircuit (2) comprenant un microprocesseur (15) et une mémoire interne (16) pour effectuer des transactions avec un terminal, **caractérisée en ce que** la mémoire interne (16) contient un microprogramme exécutable par le microprocesseur (15) du microcircuit (2) et agencé pour:
- enregistrer dans la mémoire interne (16), un cryptogramme sur des données de chaque transaction, à détection d'un événement conforme pour valider la transaction,
- émettre un signal de validation de transaction vers l'extérieur de la carte (1), après avoir enregistré le cryptogramme dans la mémoire interne (16).

6. Carte à microcircuit selon la revendication 5, **caractérisée en ce que** le microprogramme est agencé pour effectuer une comparaison dont ledit événement conforme résulte lorsque qu'un code reçu est égal à un code secret détenu dans la mémoire interne.

7. Carte à microcircuit selon la revendication 5, **caractérisée en ce que** le microprogramme est agencé pour recevoir les données de la transaction qui comprennent une date et un montant monétaire.

8. Carte à microcircuit selon la revendication 7, **caractérisée en ce que** le microprogramme est agencé pour recevoir les données de la transaction qui comprennent un identificateur de destinataire de la transaction.
